# EUROPÄISCHE PATENTSCHRIFT

(11) **EP 1 007 403 B1**
(45) Veröffentlichungstag und Bekanntmachung des Hinweises auf die Patenterteilung: **31.10.2001**
(21) Anmeldenummer: 98936370.0
(22) Anmeldetag: 18.06.1998
(51) Int. Cl.: B62K 15/00

(54) **ZWEIRÄDRIGES KLAPPFAHRRAD**
TWO-WHEELED FOLDING BICYCLE
BICYCLETTE PLIANTE A DEUX ROUES

(30) Priorität: 04.09.1997 DE 19738770
(43) Veröffentlichungstag der Anmeldung: 14.06.2000
(73) Patentinhaber: Bayerische Motoren Werke Aktiengesellschaft, 80788 München (DE)
(72) Erfinder: AUGUSTIN, Stephan, D-80801 München (DE)
(86) Internationale Anmeldenummer: EP9803717
(87) Internationale Veröffentlichungsnummer: WO9911513

(56) Entgegenhaltungen:
- DE-A- 4 311 998
- DE-A- 4 313 832
- FR-A- 528 992
- US-A- 5 069 468
- PATENT ABSTRACTS OF JAPAN vol. 095, no. 011, 26. Dezember 1995 & JP 07 205863 A (DAIKIN MFG CO LTD), 8. August 1995

## Beschreibung

Die Erfindung bezieht sich auf ein zweirädriges Klappfahrrad, wie es im Oberbegriff des Hauptanspruchs beschrieben ist.

Die DE 43 11 998 A1 zeigt ein derartiges Klappfahrrad mit einem Hauptrahmen, der sich in mehrere, miteinander gelenkig verbundene Rahmenrohre gliedert. An diesen schließt sich nach hinten ein starrer Teilrahmen für die Aufnahme der Hinterradachse an. Ein oberer Rohrzug des Hauptrahmens teilt sich in zwei Rohrabschnitte auf, die wiederum miteinander gelenkig verbunden und mit dem Gelenkpunkt an einem Unterzug festlegbar sind. Wird die Verbindung an diesem Punkt gelöst, läßt sich der Hauptrahmen wie ein scherenartiges Stabwerk in Richtung des hinteren Teilrahmens zusammenschieben.

Einen ähnlichen Aufbau zeigt die US-A-5 069 468 mit dem Unterschied, daß hier eine Stützstrebe den Oberzug mit dem Unterzug verbindet und verschiebbar am Unterzug gehalten ist. Im fahrbereiten Zustand ist die Stützstrebe jedoch am Unterzug fixiert. Bei dieser vorbekannten Ausführung sind beim Zusammenlegen alle Rahmenbauteile stets miteinander verbunden.

Schließlich läßt sich aus der FR-A-528 992, welche ein Klappfahrrad gemäß dem Oberbegriff des Anspruchs 1 zeigt, ein Klapprad entnehmen mit einem starren Hauptrahmen, an dem eine Vorderradgabel drehbar gelagert ist. Ein ebenfalls starrer Teilrahmen nimmt die Achse des Hinterrades auf. Die beiden Rahmen sind über das Tretlagerachse schwenkbar und im Bereich eines Fahrersattels lösbar miteinander verbunden. Wird diese Verbindung gelöst, läßt sich der Teilrahmen nach vorne in Richtung Vorderrad klappen.

Aufgabe der Erfindung ist es, bei einem gattungsgemäßen Klapprad einen beim Gebrauch des Fahrrads stabilen und verwindungssteifen Hauptrahmen vorzusehen, der es erlaubt, das Fahrrad mit wenigen Handgriffen zusammenzulegen.

Die Aufgabe wird erfindungsgemäß mit den Merkmalen des Hauptanspruchs gelöst. Vorteilhafte Ausgestaltungen der Erfindung ergeben sich aus den Unteransprüchen.

Nach der Erfindung ist der Hauptrahmen neben dem Teilrahmen ebenfalls starr ausgelegt und verleiht so dem Fahrradrahmen insgesamt eine ausreichend Steifigkeit. Die beiden Pendelstützen bilden - in Richtung der Ebene des Fahrradrahmens gesehen - durch ihre Anlenkpunkte eine Vierpunkt-Gelenkkette. Durch diese Anlenkung kann der hintere Teilrahmen zusammen mit den Hinterrad nach Lösen der Fixierung mühelos nach vorne in Richtung Hauptrahmen verschwenkt und dicht an den Hauptrahmen anlegt werden, so daß sich das Klapprad insgesamt klein zusammenlegen läßt. Es sei jedoch darauf hingewiesen, daß die Erfindung nicht notwendigerweise auf zwei Pendelstützen beschränkt ist. So kann je nach Erfordernis jede Pendelstütze oder auch nur eine als Doppel-Pendelstütze ausgelegt sein, die sich beiderseits der Rahmenebene in je eine Stütze aufteilt.

In der zusammengelegten Lage können gegebenenfalls Haupt- und Teilrahmen durch einen Splint oder ähnlichem fixiert sein, um dadurch das Faltrad beim Verstauen beispielsweise in einem Kofferraum eines Kraftfahrzeuges besser handhaben zu können.

Im einfachsten Fall ist der hintere Teilrahmen starr mit dem Hauptrahmen verbunden. Der Aufbau des erfindungsgemäßen Klappfahrrades erlaubt es aber auch, den hinteren Teilrahmen federnd gegenüber dem Hauptrahmen anzuordnen. Hierzu ist im Bereich der Fixierung der beiden Rahmenteile eine an sich bekannte Dämpfer-Feder-Einheit vorgesehen. Bei bestimmten Fahrsituationen wie Bergauffahrt kann es jedoch wünschenswert sein, die Federung beispielsweise durch einen einfachen Splint zwischen Teil- und Hauptrahmen stillzulegen.

Um Antriebseinflüsse auszuschalten, ist es weiter vorteilhaft, die Trettkurbel für den Kettenantrieb des Hinterrads auf dem Teilrahmen zu lagern. Desweiteren wirkt es sich für das Stabilitätsverhalten des Fahrrades während der Fahrt günstig aus, den durch die Pendelstützen sich ergebenden Momentanpol, um den der hintere Teilrahmen bei Einfederungsbewegungen schwingt, im Bereich der Achse des Trettlagers liegt. Der Momentanpol wird dabei durch den Schnittpunkt der verlängerten Verbindungslinien zwischen den Drehachsen der beiden Gelenke der jeweiligen Pendelstütze definiert. Seine Lage wandert entsprechend mit den Einfederungsbewegungen des Hinterrads. Wo er sich genau im Ausgangsfall, also bei normaler Belastung befindet, hängt von den jeweiligen Wünschen in Bezug auf die Fahreigenschaften und entsprechend von den Anstellungswinkeln der Pendelstützen ab.

Aus Produktions- und Kostengründen ist es weiter zweckmäßig, beide Pendelstützen identisch auszuformen.

Soweit bei dem erfindungsgemäßen Fahrrad ein am Hauptrahmen drehbar gelagerter Längslenker die Vorderradgabel führt, kann es - um den Bauaufwand zu reduzieren - vorteilhaft sein, das obere Drehgelenk der vorderen Pendelstütze mit diesem Drehgelenk des Längslenkers zu vereinen. In diesem Fall fallen die Drehachsen beider Gelenke zusammen.

Weitere vorteilhafte Ausgestaltungen der Erfindung ergeben sich aus der nachfolgenden Beschreibung eines Ausführungsbeispiels anhand der dazugehörigen Zeichnung. Es zeigen
- Figur 1: ein fahrbereites Klappfahrrad mit gefedertem Hinterrad,
- Figur 2: die ersten Schritte, um das Klappfahrrad nach Fig. 1 zusammenzulegen und
- Figur 3: das Fahrrad vollständig zusammengelegt.

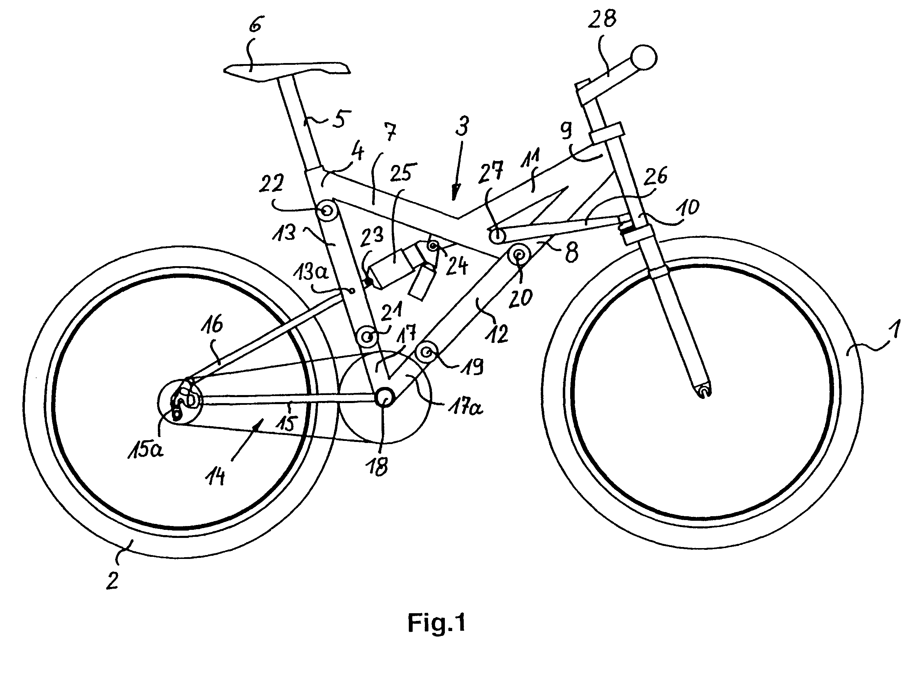

Das in Figur 1 gezeigte Klappfahrrad weist ein Vorderrad 1 und ein Hinterrad 2 auf. Die beiden Räder sind über einen aus zwei Teilen bestehenden Fahrradrahmen miteinander verbunden. Der erste Teil wird durch einen Hauptrahmen 3 gebildet, der in sich starr ausgelegt ist und in einem hinteren Abschnitt eine Aufnahme 4 für eine Sattelstütze 5 vorsieht. Die Sattelstütze 5 trägt einen Sattel 6. Von der Aufnahme 4 aus verläuft eine Rahmenstrebe 7 nach vorne in Richtung Vorderrad 1. Sie ist dabei leicht abwärts geneigt und geht an ihrem vorderen Ende in einen schräg nach oben verlaufenden Unterzug 8 über. An dessen freien Ende ist einstückig ein Lenkkopf 9 vorgesehen für die drehbare Aufnahme einer das Vorderrad 1 lagernden Vorderradgabel 10. Eine Verbindungsstrebe 11 erstreckt sich, abwärts geneigt, vom Lenkkopf 9 zu einem vorderen Abschnitt der Rahmenstrebe 7 und vervollständigt den gitterähnlichen Aufbau des Hauptrahmens 3. Die einzelnen Rahmenteile sind rohrähnliche Bauteile mit unterschiedlichen Querschnittsformen und -abmessungen. Sie sind miteinander verschweißt, hartgelötet oder in sonstiger Weise untrennbar miteinander verbunden.

Über zwei Pendelstützen 12 und 13 ist der zweite Teil des Fahrradrahmens, ein hinterer Teilrahmen 14, gelenkig mit dem Hauptrahmen 3 verbunden; die gelenkige Anbindung ist weiter unten näher beschrieben. Der Teilrahmen 14 umgibt gabelförmig das Hinterrad 2 und bildet auf jeder Radseite in etwa ein Dreieck. Aufgrund der Darstellungsart der Figur 1, in der die Blattebene die durch die Längsachse des Klappfahrrades aufgespannte Ebene des Fahrradrahmens bildet, ist nur die eine Seite des gabelförmigen Teilrahmens 14 zu sehen. Die nachfolgende Beschreibung bezieht sich daher nur auf diese Seite, soweit die andere Seite deckungsgleich ausgeführt ist.

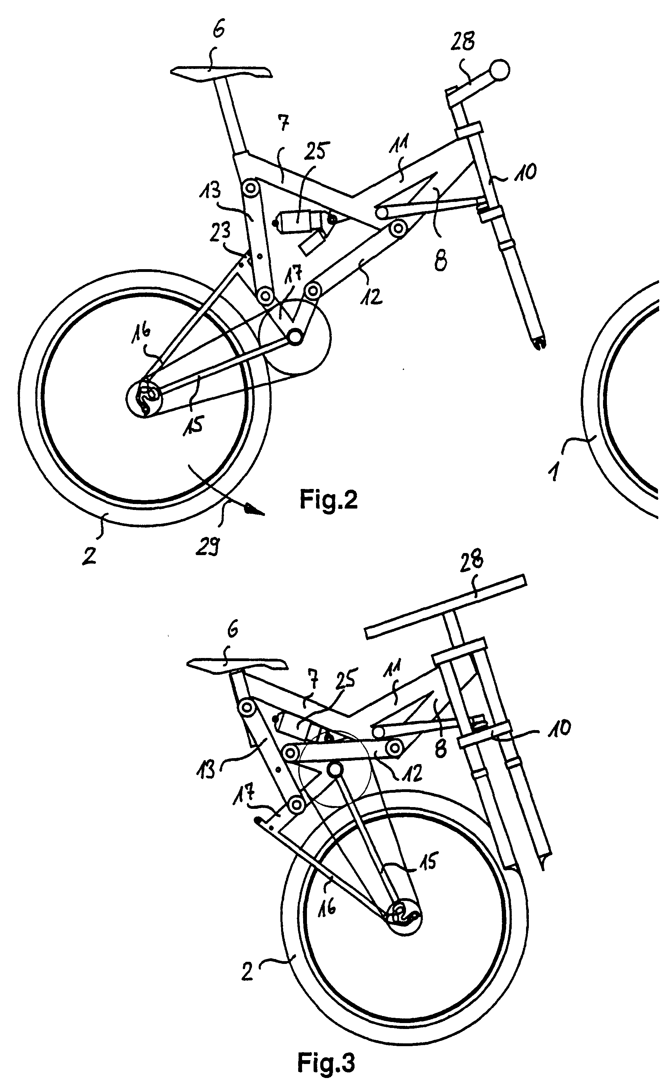

Die Dreiecksform des Teilrahmens 14 wird gebildet durch einen ersten unteren Rahmenabschnitt 15, der an seinem hinteren Ende einen Aufnahmeschlitz 15a für das Einführen einer nicht gezeichneten Radachse des Hinterrades 2 vorsieht. Daran schließt sich ein nach vorne und schräg nach oben ansteigender, oberer Rahmenabschnitt 16 an. Jenseits des Hüllkurve des Hinterrades 2 laufen die unteren und oberen Rahmenabschnitte der beiden Radseiten zusammen und sind mit einem vorderen, die dritte Seite des Dreiecks bildenden und als Einzelrohr ausgeführten Rahmenabschnitt 17 verbunden. In Figur 1 ist der Verbindungspunkt zwischen dem oberen und vorderen Rahmenabschnitt durch die Pendelstütze 13 verdeckt, in Figur 2 und noch besser in Figur 3 ist er jedoch klar erkennbar. Bezüglich der Ausgestaltungen der einzelnen Rahmenabschnitten und ihrer Befestigung untereinander treffen die Ausführungen über den Hauptrahmen in vergleichbarer Weise zu.

im Verbindungspunkt zwischen unterem und vorderem Rahmenabschnitt 15, 17 befindet sich das Trettlager 18 einer nur durch einen Kreis angedeuteten Tretkurbel mit Kettenrad. Von dem Kettenrad führt eine Antriebskette zur Nabe des Hinterrades 2.

Im Bereich des Trettlagers 18 formt der vordere Rahmenabschnitt 17 einen zum Vorderrad 1 zeigenden Fortsatz 17a aus mit einem Lagerauge für den gelenkigen Anschluß des unteren Ende der Pendelstütze 12. Das angedeutete Drehgelenk ist mit 19 bezeichnet. An ihrem oberen Ende ist die Pendelstütze 12 mit einem weiteren, im Knotenpunkt zwischen Rahmenstrebe 7 und Unterzug 8 vorgesehenen Drehgelenk 20 am Hauptrahmen 3 gelagert. Entsprechend verbindet die hintere Pendelstütze 13 über jeweils ein Drehgelenk 21, 22 den Teilrahmen 17 mit dem Hauptrahmen 3, d.h., den vorderen Rahmenabschnitt 17 mit der Aufnahme 4 für die Sattelstütze 5.

In den Figuren sind wegen der Darstallungsart immer nur eine Pendelstütze 12, 13 erkennbar. Tatsächlich aber ist jede Pendelstütze 12, 13 als Doppel-Pendelstütze ausgeführt, die sich beiderseits der Rahmenebene in je eine Stütze aufteilt. Es sei aber darauf hingewiesen, daß bei entsprechender konstruktiver Auslegung auf derartige Doppel-Pendelstützen zugunsten von einfachen Pendelstützen verzichtet werden kann.

Die Drehgelenke der Pendelstützen 12, 13 bilden eine Viergelenkkette und durch die geeignete Anordnung der Gelenke zueinander läßt sich, wie noch beschrieben wird, das Klapprad klein zusammenlegen. Im fahrbereiten Zustand ist es jedoch notwendig, das Zusammenklappen der Rahmenteile zu verhindern und dafür den Teilrahmen am Hauptrahmen zu fixieren. Hierfür verlängert sich der obere Rahmenabschnitt 16 über den vorderen Rahmenabschnitt 17 hinaus in Richtung Hauptrahmen 3; die Verlängerung ist mit 23 bezeichnet. Entsprechend ist im Knotenpunkt zwischen Rahmenstrebe 7 und Verbindungsstrebe 11 ein in Richtung des hinteren Teilrahmens 14 zeigender Fortsatz 23 vorgesehen. Zwischen diesem und dem Fortsatz 24 ist an beiden Punkten gelenkig eine in sich zusammen schiebbare Dämpfereinheit 25 angebunden. Dabei läßt sich das Gelenk am Fortsatz 23 einfach mit der Hand lösen (nicht im einzelnen dargestellt). Über die Dämpfereinheit 25 ist einmal der Teilrahmen 14 gegenüber dem Hauptrahmen 7 abgestützt, zum anderen wirkt der Teilrahmen 14 dadurch als gefederte Hinterradschwinge.

Über eine Splintverbindung - in Figur 1 ist stellvertretend hierfür in der Pendelstütze 13 eine Steckbohrung 13a dargestellt - läßt sich der Teilrahmen an der Pendelstütze 13 festlegen. Auf diese Weise ist die Dämpfereinheit überbrückt und der Fahrradrahmen zeigt insgesamt das Verhalten eines starren Rahmens.

Ein Längslenker 26 verbindet die Vorderradgabel 10 mit dem Hauptrahmen 3. Hierfür ist das hintere Ende des Längslenker 26 über ein Drehgelenk 27 im Verbindungsbereich zwischen Rahmenstrebe 7 und Unterzug 8 am Hauptrahmen 3 gelagert. Die Drehachse des Drehgelenks 27 verläuft dabei quer, das heißt, senkrecht in die Zeichenebene hinein und somit parallel zu den Gelenkachsen der Pendelstützen 12, 13.. Ein nicht näher dargestelltes Kugelgelenk lagert das vordere Ende des Längslenkers 26 an der Vorderradgabel 10. Schließlich geht die Vorderradgabel 10 in eine Lenkstange 27 über.

In den Figuren 2 und 3 ist der Faltvorgang des Klapprades dargestellt. Nach Figur 2 wurde soeben die Dämpfereinheit 25 von dem Fortsatz 23 gelöst. Hierfür ist eine leicht von Hand betätigbare Verbindung, zum Beispiel ein Spannverschluß vorgesehen. Das Vorderrad wurde ebenfalls bereits von der Vorderradgabel 10 gelöst und abgenommen. Das Lösen des Vorderrades erfolgt wiederum durch das Öffnen eines üblichen, von Hand betätigbaren, nicht näher dargestellten Spannverschlusses. Nachdem diese Arbeiten vorgenommen sind, läßt sich der hintere Teilrahmen 14 zusammen mit dem Hinterrad 2 in Pfeilrichtung 29 nach vorne klappen.

In Figur 3 ist das zusammengelegte Klappfahrrad gezeigt. Dabei wurde die Vorderradgabel 10 und 90 Grad gedreht und der Sattel 6 nach unten verschoben. Durch Abnehmen des Hinterrads 2, Entfernen des Sattels 6 und der Lenkstange 28 läßt sich das Fahrrad noch kleiner zusammenlegen. Es findet Platz beispielsweise in einem Kofferraum eines Kraftfahrzeuges oder es kann auch in einem Rucksack mitgenommen werden.

## Patentansprüche

1. Zweirädriges Klappfahrrad, das in der Ebene des Fahrradrahmens zusammenlegbar ist, mit einem starren Hauptrahmen (3), an dessen hinterem Rahmenabschnitt eine Sattelstütze (5) befestigbar und an dessen vorderem Rahmenabschnitt eine Vorderradgabel (10) drehbar gelagert ist, und mit einem am Hauptrahmen (3) über eine lösbare Verbindung festgelegten, hinteren starren Teilrahmen (14) für die Aufnahme der Hinterradachse,
**dadurch gekennzeichnet, daß**
- der Hauptrahmen (3) und der Teilrahmen (14) über mindestens zwei Pendelstützen (12, 13) in der Rahmenebene zusammenlegbar sind und
- jede Pendelstütze (12, 13) hierfür mit ihrem einen Ende über ein erstes Drehgelenk (20, 22) am Hauptrahmen (3) und mit ihrem anderen Ende über ein weiteres Drehgelenk (19, 21) am Teilrahmen (14) angelenkt ist und die Drehachsen aller Drehgelenke (19, 20, 21, 22) parallel zueinander und senkrecht zur Rahmenebene verlaufen.

2. Klappfahrrad nach Anspruch 1, **dadurch gekennzeichnet, daß** der Teilrahmen (14) als Hinterradschwinge ausgebildet ist und zwischen ihm und seinem Festlegungspunkt am Hauptrahmen (3) ein Stoßdämpfer (25) für das Dämpfen der Einfederungsbewegungen des Hinterrades (2) angeordnet ist.

3. Klappfahrrad nach Anspruch 1 oder 2, **gekennzeichnet durch** folgende Merkmale:
- der Hauptrahmen (3) besteht aus einer von der Aufnahme für die Sattelstütze (5) nach vorne verlaufenden Rahmenstrebe (7), einem sich daran anschließenden Unterzug (8), der an seinem vorderen Ende einen Lenkkopf (9) für die Vorderradgabel (10) ausbildet und einer oberen Verbindungsstrebe (11) zwischen Lenkkopf (9) und Rahmenstrebe (7);
- der Teilrahmen (14) ist dreiecksförmig ausgelegt mit einem ersten unteren Rahmenabschnitt (15), der an seinem hinteren Ende die Radachse des Hinterrades (2) aufnimmt, einem an dieses Ende anschließenden, schräg nach oben und vorne verlaufenden oberen Rahmenabschnitt (16) und einem vorderen Rahmenabschnitt (17), der die vorderen Endbereiche des unteren und oberen Rahmenabschnitts (15, 16) miteinander verbindet;
- eine vordere Pendelstütze (12) ist mit der des Lenkkopfes (9) abgewandten Seite des Unterzugs (8) des Hauptrahmens (3) einerseits und mit dem Teilrahmen (14) im Bereich eines Fortsatzes (17a) des vorderen Rahmenabschnittes (17) andererseits gelenkig verbunden;
- eine hintere Pendelstütze (13) ist mit einem oberen Gelenk (22) mit dem die Sattelstütze (5) aufnehmenden Ende der Rahmenstrebe (7) des Hauptrahmens (3) und mit einem unteren Gelenk (21) am vorderen Rahmenabschnitt (17) des Teilrahmens (14) gelagert;
- das der Radachse abgewandte Ende des oberen Rahmenabschnitts (16) ist im Knotenpunkt zwischen Rahmen- und Verbindungsstrebe (7, 11) am Hauptrahmen (3) fixiert.

4. Klappfahrrad nach Anspruch 3, **dadurch gekennzeichnet, daß** der Teilrahmen (14) gabelförmig das Hinterrad (2) umgibt und auf jeder Radseite einen unteren und oberen Rahmenabschnitt (15, 16) aufweist, die im Bereich des vorderen Rahmenabschnitts (17) zu einen einem einzigen oberen und unteren Rahmenabschnitt zusammengeführt sind.

5. Klappfahrrad nach Anspruch 3 oder 4, **dadurch gekennzeichnet, daß** der Knotenpunkt zwischen dem unteren und vorderen Rahmenabschnitts (15, 16) des Teilrahmens (14) ein Trettlager (18) aufnimmt.

6. Klappfahrrad nach einem der Ansprüche 3 bis 5, **dadurch gekennzeichnet, daß** der durch die Drehgelenke (19, 20, 21, 22) der Pendelstützen (12, 13) sich ergebende Momentanpol im Bereich der Achse des Tretlagers (18) liegt.

7. Klappfahrrad nach einem der Ansprüche 3 bis 6, **dadurch gekennzeichnet; daß** der obere Rahmenabschnitt (16) des Teilrahmens (14) an der hinteren Pendelstütze (13) festlegbar ist.

8. Klappfahrrad nach einem der Ansprüche 3 bis 7, **dadurch gekennzeichnet, daß** ein Längslenker (26) die Vorderradgabel (10) abstützt in der Weise, daß der Längslenker (26) mit seinem einen Ende über ein Drehgelenk (27) mit querverlaufenden Schwenkachse im Bereich des Knotenpunktes zwischen Rahmenstrebe (7) und Unterzug (8) des Hauptrahmens (3) gelagert und sein anderes Ende über ein Kugelgelenk mit der Vorderradgabel (10) verbunden ist.

9. Klappfahrrad nach Anspruch 8, **dadurch gekennzeichnet, daß** die Achse des Drehgelenks (27) mit der Achse des oberen Drehgelenks (20) der vorderen Pendelstütze (12) zusammenfällt.

10. Klappfahrrad nach einem der Ansprüche 2 oder 9, **gekennzeichnet durch** eine in der Aufnahme der Rahmenstrebe (7) verschiebbare und in der gewählten Position fixierbare Sattelstütze (5).

## Claims

1. A two-wheeled folding cycle collapsible in the plane of the bicycle frame, comprising a rigid main frame (3) having a rear portion on which a saddle support (5) can be fastened and a front portion on which a front-wheel fork (10) is rotatably mounted, and also comprising a rigid rear part frame (14) fastened to the main frame (3) by a releasable connection and adapted to receive the rear wheel axle,
**characterised in that**
- the main frame (3) and the part frame (14) are collapsible via at least three hinged supports (12, 13) in the plane of the frame and
- each hinged support (12, 13) is pivoted at one end via a first swivel joint (20, 22) to the main frame (3) and at its other end via another swivel joint (19, 21) to the part frame (14) and the axes of rotation of all the swivel joints (19, 20, 21, 22) extend parallel to one another and at right angles to the plane of the frame.

2. A folding bicycle according to claim 1, **characterised in that** the part frame (14) is in the form of a rear-wheel rocker arm and a shock absorber (25) for damping the spring deflection movements of the rear wheel (2) is disposed between the part frame and the place where it is fastened to the main frame (3).

3. A folding bicycle according to claim 1 or 2, **characterised by** the following features:
- the main frame (3) comprises a strut (7) extending forwards from the holder for the saddle support (5), an adjoining truss (8) which at its front end forms a guide head (9) for the front wheel fork (10), and an upper connecting strut (11) between the guide head (9) and the strut (7);
- the part frame (14) is triangular and has a first bottom frame portion (15) receiving the axle of the rear wheel (2) at its rear end, an upwardly sloping and forwardly extending upper frame portion (16) adjoining the said end, and a front frame portion (17) which connects the front end regions of the lower and upper frame portions (15, 16);
- a front hinged support (12) is pivotably connected on the one hand to the side of the main-frame (3) truss (8) remote from the guide head (9) and on the other hand to the part frame (14) in the region of a projection (17a) on the front frame portion (17);
- a rear hinged support (13) has an upper joint (22) connected to the end of the main-frame strut (7) receiving the saddle support (5) and a lower joint (21) mounted on the front portion (17) of the part frame (14), and
- the end of the upper frame portion (16) remote from the wheel axle is fixed to the main frame (3) at the junction between the frame strut (7) and the connecting strut (11).

4. A folding bicycle according to claim 3, **characterised in that** the part frame (14) is forked and surrounds the rear wheel (2) and has an upper and a lower portion (15, 16) on each side of the wheel, joined to form a single upper and lower frame portion in the region of the front frame portion (17).

5. A folding bicycle according to claim 3 or claim 4, **characterised in that** the junction between the lower portion (15) and the front portion (16) of the part frame (14) receives a bottom bracket bearing (18).

6. A folding bicycle according to any of claims 3 to 4, **characterised in that** the instantaneous centre of rotation resulting from the swivel joints (19, 20, 21, 22) of the hinged supports (12, 13) lies in the neighbourhood of the axis of the bottom bracket bearing.

7. A folding bicycle according to any of claims 3 to 6, **characterised in that** the upper portion (16) of the part frame (14) can be fixed to the rear hinged support (13).

8. A folding bicycle according to any of claims 3 to 7, **characterised in that** a trailing arm supports the front wheel fork (10) **in that** one end of the trailing arm (26) is mounted via a swivel joint (27) having a transverse axis of rotation in the region of the junction between the strut (7) and the truss (8) of the main frame (3) and its other end is connected to the front wheel fork (10) by a ball joint.

9. A folding bicycle according to claim 8, **characterised in that** the axis of the swivel joint (27) coincides with the axis of the upper swivel joint (20) of the front hinged support (12).

10. A folding bicycle according to any of claims 2 to 9, **characterised by** a saddle support (5) movable in the holder on the frame strut (7) and adapted to be fixed in the chosen position.

## Revendications

1. Bicyclette pliante qui se replie dans le plan de son cadre et qui comporte un cadre principal (3) rigide dont la partie arrière reçoit un tube de selle (5) et la partie avant reçoit à rotation la fourche de la roue avant (10), ainsi qu'une partie de cadre arrière (14), fixée de manière amovible au cadre principal (3), pour recevoir l'axe de la roue arrière,
**caractérisée en ce que**
- le cadre principal (3) et la partie de cadre (14) sont reliés par au moins deux appuis pendulaires (12, 13) qui peuvent se replier dans le plan du cadre, et
- chaque appui pendulaire (12, 13) est articulé par une extrémité à une première articulation (20, 22) au cadre principal (3) et par son autre extrémité, par une autre articulation (19, 21) à la partie de cadre (14) et les axes de toutes les articulations (19, 20, 21, 22) sont parallèles entre eux et perpendiculaires au plan du cadre.

2. Bicyclette pliante selon la revendication 1,
**caractérisée en ce que**
la partie de cadre (14) est réalisée comme bielle de roue arrière et entre cette partie de cadre et son point de fixation au cadre principal (3), il est prévu un amortisseur (25) pour amortir le mouvement de suspension de la roue arrière (2).

3. Bicyclette pliante selon l'une quelconque des revendications 1 ou 2,
**caractérisée en ce que**
- le cadre principal (3) est formé d'une entretoise (7) partant de l'appui du tube de selle (5), vers l'avant, d'une branche inférieure (8) qui rejoint cette entretoise et dont l'extrémité avant est en forme de tête de guidon (9) pour recevoir la fourche de la roue avant (10) et d'une entretoise de liaison (11), supérieure, entre la tête de guidon (9) et l'entretoise (7),
- la partie de cadre (14) est en forme de triangle avec un premier segment de cadre (15) inférieur dont l'extrémité arrière reçoit l'axe de la roue arrière (2), et partant de cette extrémité, un segment de cadre supérieur (16) remontant vers l'avant et un segment de cadre avant (17) qui relie l'extrémité avant du segment de cadre inférieur et du segment de cadre supérieur (15, 16),
- un appui pendulaire avant (12) est relié de manière articulée au côté de la branche inférieure (8) du cadre principal (3), à l'opposé de la tête de guidon (9) et la partie de cadre (14) au niveau d'un prolongement (17a) du segment de cadre avant (17),
- un appui pendulaire arrière (13) relié par une articulation supérieure (22) à l'extrémité de l'entretoise (7) recevant le tube de selle (5) du cadre principal (3), et par une articulation inférieure (21) au segment de cadre (17) avant de la partie de cadre (14),
- l'extrémité du segment de cadre supérieur (16) à l'opposé de l'axe de roue, est fixée au cadre principal (3), à la jonction de l'entretoise de cadre (7) et de l'entretoise de liaison (11).

4. Bicyclette pliante selon la revendication 3,
**caractérisée en ce que**
la partie de cadre (14) entoure la roue arrière (2) à la manière d'une fourche et présente de chaque côté de la roue, un segment de cadre inférieur (15) et un segment de cadre supérieur (16) qui se rejoignent au niveau du segment de cadre avant (17) pour former un unique segment de cadre supérieur et inférieur.

5. Bicyclette pliante selon l'une quelconque des revendications 3 ou 4,
**caractérisée en ce que**
la jonction du segment de cadre inférieur (15) et du segment de cadre supérieur (16) de la partie de cadre (14) porte le palier de pédalier (18).

6. Bicyclette pliante selon l'une quelconque des revendications 3 à 5,
**caractérisée en ce que**
le pôle de couple qui résulte des articulations (19, 20, 21, 22) des appuis pendulaires (12, 13) se situe au niveau de l'axe du pédalier (18).

7. Bicyclette pliante selon l'une quelconque des revendications 3 à 6,
**caractérisée en ce que**
le segment de cadre supérieur (16) de la partie de cadre (14) est fixé à l'appui pendulaire arrière (13).

8. Bicyclette pliante selon l'une quelconque des revendications 3 à 7,
**caractérisée en ce qu'**
une bielle longitudinale (26) soutient la fourche de roue avant (10) de façon telle que cette bielle longitudinale (26) reçoit sur une extrémité, par l'intermédiaire d'une articulation (27), l'axe de pivotement transversal au niveau de la jonction entre l'entretoise de cadre (7) et la branche inférieure (8) du cadre principal (3), et que son autre extrémité est reliée à la fourche de roue avant (10) par une articulation à billes.

9. Bicyclette pliante selon la revendication 8,
**caractérisée en ce que**
l'axe de l'articulation (27) coïncide avec l'axe de l'articulation supérieure (20) de l'appui pendulaire avant (12).

10. Bicyclette pliante selon l'une quelconque des revendications 2 ou 9,
**caractérisée par**
un tube de selle (5) coulissant dans son logement de l'entretoise de cadre (7) et pouvant être bloqué dans la position choisie.
